# EUROPEAN PATENT SPECIFICATION

(11) **EP 2 322 786 B1**
(45) Date of publication and mention of the grant of the patent: **07.12.2011**
(21) Application number: 10188413.8
(22) Date of filing: 21.10.2010
(51) Int. Cl.: F02M 25/07, F02D 41/00

(54) **Control system for internal combustion engine**
Steuersystem für einen Verbrennungsmotor
Système de contrôle pour moteur à combustion interne

(30) Priority: 17.11.2009 JP 2009261664
(43) Date of publication of application: 18.05.2011
(73) Proprietor: Honda Motor Co., Ltd., Tokyo 107-8556 (JP)
(72) Inventor: Endo, Masatoshi, Saitama 351-0193 (JP); Sasaki, Shoji, Saitama 351-0193 (JP)
(74) Representative: Trossin, Hans-Jürgen

(56) References cited:
- EP-A1- 1 640 599
- DE-A1-102006 035 423
- JP-A- 2001 295 678
- JP-A- 2009 221 903

## Description

### BACKGROUND OF THE INVENTION

### Field of the Invention

The present invention relates to a control system for an internal combustion engine, for discharging negative pressure remaining in a negative pressure-supplying system when the engine is stopped.

### Description of the Related Art

Conventionally, there has been proposed a control system of this kind in Japanese Laid-Open Patent Publication (Kokai) No. 2009-221903. This engine has an EGR device for recirculating part of exhaust gases from an exhaust system to an intake system as EGR gases, which includes an EGR passage, an EGR bypass valve, a negative pressure-switching valve, and a negative pressure actuator.

The EGR passage has a cooler passage provided with an EGR cooler for cooling EGR gases and a bypass passage for bypassing the cooler passage, and the EGR bypass valve is provided at a branch portion branching into both passages. The negative pressure-switching valve is formed by a solenoid valve of an openable type, and is opened and closed according to energization and deenergization thereof to thereby switch between the supply of negative pressure from a negative pressure pipe to the negative pressure actuator and the stoppage of the supply of negative pressure. The negative pressure actuator actuates the EGR bypass valve according to the negative pressure switching, whereby the EGR bypass valve switches the EGR passage between the cooler passage and the bypass passage.

Further, in this control system, when the engine is stopped, a negative pressure-operating device is operated to discharge negative pressure remaining in the negative pressure pipe. This suppresses upward oil flow (flow of engine oil from a lubrication section of a negative pressure source into the negative pressure pipe) caused by negative pressure remaining in the negative pressure pipe.

Further, an engine automatic stop/restart device is disclosed in Japanese Laid-Open Patent Publication (Kokai) No. 2001-295678. This engine automatic stop/restart device is equipped with a plurality of control units, such as an engine control unit and a battery control unit, and a total control unit for supplying electric power to these control units.

In this engine automatic stop/restart device, when the engine is in an idle stop in which the engine is automatically stopped when predetermined conditions are satisfied, the power supply from the total control unit to at least one of the control units is stopped. This reduces power consumption during the idle stop of the engine.

However, to reduce power consumption when the engine is stopped, as in the engine automatic stop/restart device disclosed in Japanese Laid-Open Patent Publication (Kokai) No. 2001-295678, if the control system disclosed in Japanese Laid-Open Patent Publication (Kokai) No. 2009-221903 stops the energization of the negative pressure-switching valve immediately after the engine is stopped, negative pressure sometimes remains in the negative pressure pipe because discharge of negative pressure is not completed. In this case, the EGR bypass valve is operated by the remaining negative pressure, which increases the frequency of operation of the EGR bypass valve, and as a result, the service life of the EGR bypass valve may be reduced. Particularly, when the stopping of the engine is performed by the idle stop, the engine is more frequently stopped than when the stopping of the engine is performed by turn-off of an ignition switch, and hence the frequency of operation of the EGR bypass valve becomes very high, which makes the above-mentioned inconvenience conspicuous.

Further, to prevent such an inconvenience, if the energization of the negative pressure-switching valve is stopped e.g. when a relatively long predetermined time has elapsed after stopping the engine, the energization of the negative pressure-switching valve is sometimes continued even after completion of the discharge of the negative pressure, and hence electric power is wasted during the time.

### SUMMARY OF THE INVENTION

It is an object of the present invention to provide a control system for an internal combustion engine, which reduces the frequency of operation of an EGR bypass valve, thereby making it possible to prolong a service life of the EGR bypass valve and reduce the power consumption of a negative pressure-switching valve that actuates the EGR bypass valve.

To attain the above object, the present invention provides a control system for an internal combustion engine, including an EGR passage that recirculates part of exhaust gases discharged from an engine from an exhaust system to an intake system, as EGR gases, the EGR passage having a cooler passage provided with an EGR cooler, and a bypass passage bypassing the cooler passage, an EGR bypass valve that is provided at a branch portion of the EGR passage branching into the cooler passage and the bypass passage, for switching the EGR passage between the cooler passage and the bypass passage, a negative pressure source that generates negative pressure, and a negative pressure-supplying passage that is connected to the negative pressure source, characterized by comprising a negative pressure-switching valve that, when energized, causes the EGR bypass valve to be driven toward one of the cooler passage and the bypass passage, and when deenergized, causes the EGR bypass valve to be driven toward the other of the cooler passage and the bypass passage by negative pressure in the negative pressure-supplying passage, negative pressure-discharging means for discharging negative pressure remaining in the negative pressure-supplying passage at a time of stopping the engine, negative pressure discharge completion-determining means for determining whether or not discharge of negative pressure by the negative pressure-discharging means is completed, and energization stopping means for stopping energization of the negative pressure-switching valve when it is determined by the negative pressure discharge completion-determining means that discharge of negative pressure from the negative pressure-supplying passage is completed.

With the configuration of this control system according to the present invention, the negative pressure-switching valve, when energized, causes the EGR bypass valve to be driven toward one of the cooler passage and the bypass passage of the EGR passage, and when deenergized, causes the EGR bypass valve to be driven toward the other of the cooler passage and the bypass passage by the negative pressure in the negative pressure supplying-passage. Further, when the engine is stopped, the negative pressure remaining in the negative pressure-supplying passage is discharged, and it is determined whether or not the discharge of the negative pressure is completed. When it is determined that discharge of the negative pressure is completed, the energization of the negative pressure-switching valve is stopped.

Therefore, when the energization of the negative pressure-switching valve is stopped, the negative pressure remaining in the negative pressure-supplying passage has been positively discharged, and hence the EGR bypass valve cannot be operated by negative pressure. This makes it possible to reduce the frequency of operation of the EGR bypass valve, thereby making it possible to prolong the service life of the EGR bypass valve.

Further, since the energization of the negative pressure-switching valve is stopped when it is determined that the discharge of the negative pressure from the negative pressure-supplying passage is completed, this prevents the energization of the negative pressure-switching valve from being continued after completion of the discharge of the negative pressure, and hence it is possible to stop the energization of the negative pressure-switching valve in optimum timing, which makes it possible to reduce the power consumption.

Preferably, the time of stopping the engine is a time of an idle stop in which the engine is automatically stopped when predetermined idle stop conditions are satisfied.

As described above, in the case where the stopping of the engine is performed by the idle stop, the engine is frequently stopped, compared with the case where the stopping of the engine is performed by turn-off of an ignition switch. With the configuration of the preferred embodiment, the above-mentioned negative pressure discharge control is executed during the idle stop in which the frequency of stoppage of the engine is very high, and hence it is possible to more effectively obtain the above-mentioned advantageous effect of reducing the frequency of operation of the EGR bypass valve.

Preferably, the control system further comprises negative pressure-detecting means for detecting negative pressure in the negative pressure-supplying passage, EGR bypass valve opening-detecting means for detecting a degree of opening of the EGR bypass valve, and energization suspending means for temporarily stopping the energization of the negative pressure-switching valve, wherein the energization suspending means temporarily stops the energization of the negative pressure-switching valve, when the detected negative pressure in the negative pressure-supplying passage becomes smaller than a predetermined value after a start of discharge of negative pressure by the negative pressure-discharging means, and the negative pressure discharge completion-determining means determines that the discharge of negative pressure from the negative pressure-supplying passage is completed when the detected degree of opening of the EGR bypass valve remains unchanged after temporary stoppage of the energization.

With the configuration of the preferred embodiment, when the detected negative pressure in the negative pressure-supplying passage becomes smaller than the predetermined value after the start of discharge of negative pressure by the negative pressure-discharging means, the energization of the negative pressure-switching valve is temporarily stopped. Thereafter, when the detected degree of opening of the EGR bypass valve remains unchanged, it is determined that the discharge of the negative pressure from the negative pressure-supplying passage is completed. This is because assuming that the discharge of the negative pressure from the negative pressure-supplying passage has been completed, the opening degree of the EGR bypass valve cannot be changed by negative pressure. From the above, it is possible to accurately determine the completion of the discharge of the negative pressure, and hence it is possible to stop the energization of the negative pressure-switching valve in earlier optimum timing based on the result of the determination. Therefore, it is possible to more effectively obtain the above-mentioned advantageous effects of reducing the power consumption.

The above and other objects, features, and advantages of the present invention will become more apparent from the following detailed description taken in conjunction with the accompanying drawings.

### BRIEF DESCRIPTION OF THE DRAWINGS

FIG. 1 is a schematic diagram of an internal combustion engine to which the present invention is applied;
FIG. 2 is a cross-sectional view of a negative pressure-adjusting valve in a state controlled to a negative pressure discharge mode;
FIG. 3 is a cross-sectional view of the negative pressure-adjusting valve in a state controlled to a negative pressure introduction mode;

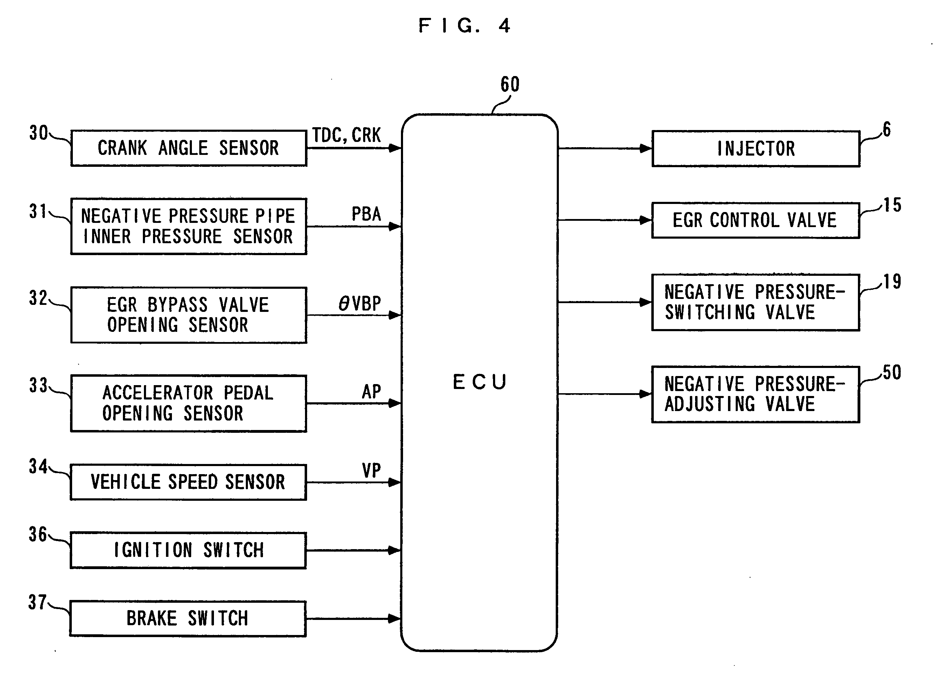

FIG. 4 is a block diagram of a control system;
FIG. 5 is a flowchart of a process for negative pressure discharge control executed when idle stop conditions are satisfied;
FIG. 6 is a flowchart of a negative pressure discharge completion determination process, which is a sub routine; and
FIG. 7 is diagram showing an example of an operation of the control system performed according to the negative pressure discharge control process.

### DETAILED DESCRIPTION OF PREFERRED EMBODIMENTS

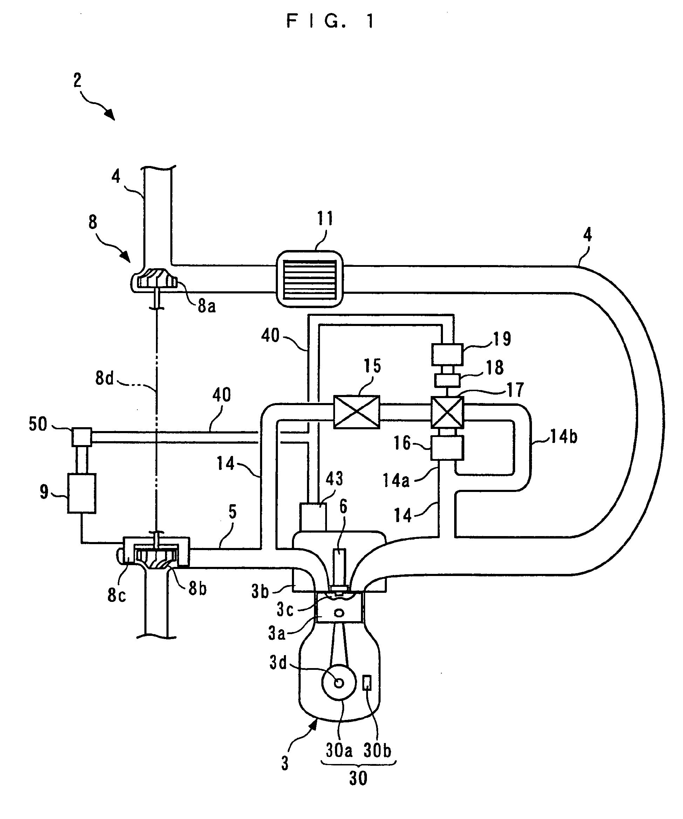

The invention will now be described in detail with reference to drawings showing a preferred embodiment thereof. FIG. 1 schematically shows the arrangement of a control system 2 according to the present invention, together with an internal combustion engine (hereinafter referred to as the "engine") 3 to which is applied the control system 2. The engine 3 is e.g. a four-cylinder diesel engine installed on a vehicle (not shown).

The engine 3 includes pistons 3a, cylinder heads 3b, combustion chambers 3c, and a crankshaft 3d. Each cylinder head 3b has an intake pipe 4 and an exhaust pipe 5 connected thereto, with a fuel injection valve (hereinafter referred to as "the injector") 6 mounted therethrough such that it faces the combustion chamber 3c.

The injector 6 is provided for each of cylinders (not shown) of the engine 3, and injects fuel into the combustion chamber 3c of the cylinder. The injection amount and injection timing of fuel injected by the fuel injection valve 6 are controlled by a control signal from an ECU 60, referred to hereinafter.

The crankshaft 3d is provided with a crank angle sensor 30 formed by a magnet rotor 30a and an MRE pickup 30b. The crank angle sensor 30 delivers a CRK signal and a TDC signal, which are both pulse signals, to the ECU 60 along with rotation of the crankshaft 3d whenever the crankshaft rotates through predetermined crank angles (e.g. 30° and 180°), respectively. The ECU 60 calculates the rotational speed NE of the engine 3 (hereinafter referred to as "the engine speed NE") based on the CRK signal.

Further, the engine 3 has a supercharger 8 disposed therein. The supercharger 8 includes a compressor blade 8a mounted in the intake pipe 4, a turbine blade 8b and a plurality of rotatable variable vanes 8c provided in the exhaust pipe 5, and a shaft 8d which connects these blades 8a and 8b. In the supercharger 8, as the turbine blade 8b is driven for rotation by exhaust gases flowing through the exhaust pipe 5, the compressor blade 8a integrally formed with the turbine blade 8b is also rotated, whereby the supercharger 8 is caused to perform a supercharging operation for pressurizing intake air in the intake pipe 4.

A negative pressure actuator 9 is connected to the variable vanes 8c via a lift rod (not shown). The negative pressure actuator 9 is of a diaphragm type which is operated by negative pressure. The negative pressure actuator 9 has negative pressure supplied from a vacuum pump 43 through a negative pressure pipe 40 via a negative pressure-adjusting valve 50. The vacuum pump 43 is of a vane type, and is driven by a camshaft (not shown) along with the operation of the engine 3 to supply negative pressure into the negative pressure pipe 40.

The negative pressure-adjusting valve 50 is provided for adjusting negative pressure supplied to the negative pressure actuator 9 and adjusting negative pressure in the negative pressure pipe 40, and is duty-controlled by a control signal from the ECU 60. This changes the negative pressure supplied to the negative pressure actuator 9, and accordingly the lift amount of the lift rod is changed, whereby the degree of opening of the variable vanes 8c is continuously changed to thereby continuously control boost pressure.

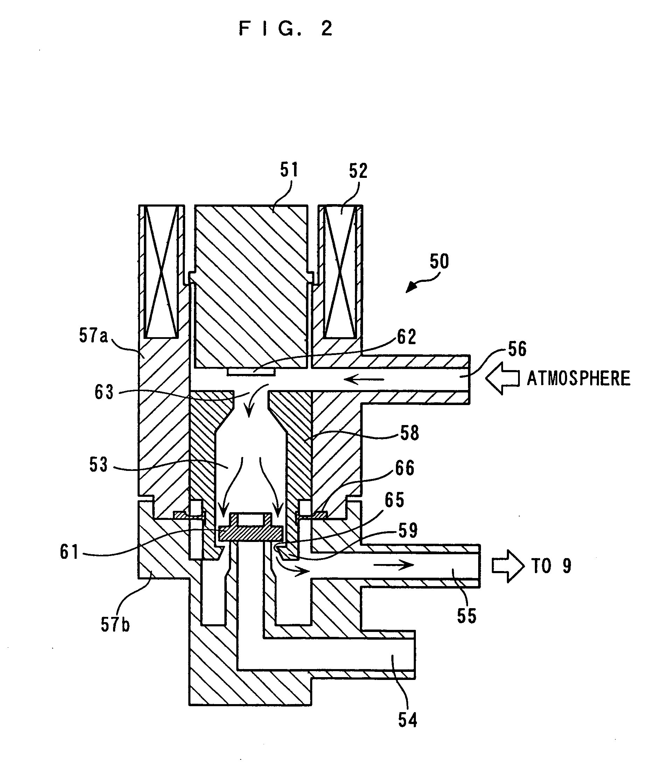

Referring to FIG. 2, the negative pressure-adjusting valve 50 comprises a stator core 51, a coil 52, a negative pressure introduction passage 54, a negative pressure delivery passage 55, an atmospheric pressure passage 56, and a piston 58. The stator core 51 is inserted in and fixed to a first housing 57a, and an end surface thereof toward the piston 58 is provided with a sheet-like valve element 62. The coil 52 is disposed outside the stator core 51, and is electrically connected to the ECU 60. The piston 58 is formed of a magnetic material, and is slidably disposed within the first housing 57a. With the above-described arrangement, when the coil 52 is energized by a drive signal from the ECU 60, the piston 58 is attracted toward the stator core 51 by magnetic flux generated by the energized coil.

The piston 58 is hollow, and has an inner passage 53 extending in a vertical direction. The inner passage 53 has a top end formed as an atmosphere side opening 63 and a lower end formed as a negative pressure actuator side opening 65, and a hook 59 protruding inward is formed at the negative pressure actuator side opening 65. Further, the first housing 57a is integrally provided with the atmospheric pressure passage 56 which opens in the vicinity of a top end of the piston 58.

A second housing 57b is fitted and fixed to a lower end of the first housing 57a. A diaphragm 66 formed of an elastic material has an outer end thereof sandwiched between the two housings 57a and 57b, and an inner end thereof hermetically fitted to an outer peripheral wall of the piston 58.

Further, the second housing 57b is integrally provided with the negative pressure introduction passage 54 and the negative pressure delivery passage 55. The negative pressure delivery passage 55 has one end connected to the negative pressure actuator 9, and the other end opening in the vicinity of the lower end of the piston 58. The negative pressure introduction passage 54 has one end connected to the negative pressure pipe 40 and the other end extending through the negative pressure actuator side opening 65 and slightly protruding into the inner passage 53 of the piston 58. A valve element 61 is provided at a top end of the negative pressure introduction passage 54, for opening and closing the same. In a state where the valve element 61 closes the negative pressure introduction passage 54, as shown in FIG. 2, a gap is formed between the valve element 61 and the hook 59 of the piston 58, and through this gap, the inner passage 53 and the negative pressure delivery passage 55 of the piston 58 are communicated with each other.

Next, a description will be given of the operation of the negative pressure-adjusting valve 50 constructed as described above. When the coil 52 is not energized, the piston 58 is in a lower position as shown in FIG. 2 by resilience of a spring, not shown, whereby the atmosphere side opening 63 is opened, and the negative pressure introduction passage 54 is closed by the valve element 61. Therefore, the negative pressure supplied from the vacuum pump 43 is not supplied to the negative pressure actuator 9, and as indicated by arrows in FIG. 2, the atmospheric pressure is supplied to the negative pressure actuator 9 through the atmospheric pressure passage 56, the atmosphere side opening 63, the inner passage 53 of the piston 58, the gap between the valve element 61 and the hook 59, and the negative pressure delivery passage 55. In accordance with this, the negative pressure in the negative pressure actuator 9 is discharged into the atmosphere through the reverse of the above-mentioned pathway (hereinafter referred to as the "negative pressure discharge mode").

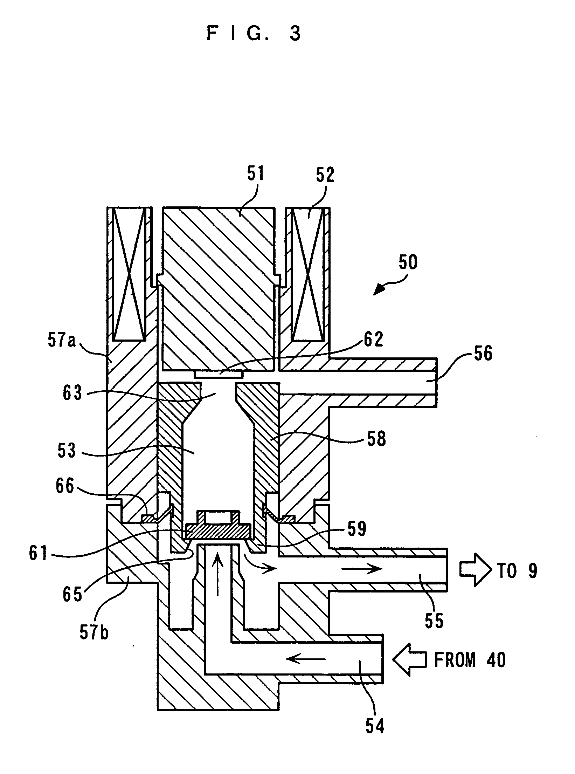

When the coil 52 is energized from this state, as shown in FIG. 3, the piston 58 is attracted toward the stator core 51 to thereby move upward. In accordance with this, the hook 59 of the piston 58 is engaged with the valve element 61, whereby the negative pressure actuator side opening 65 of the piston 58 is closed, and the valve element 61 moves toward the stator core 51 together with the piston 58, whereby the negative pressure introduction passage 54 is opened. As a result, as indicated by arrows in FIG. 3, the negative pressure supplied from the vacuum pump 43 is introduced into the negative pressure actuator 9 through the negative pressure introduction passage 54 and the negative pressure delivery passage 55 (hereinafter referred to as the "negative pressure introduction mode"). The amount of negative pressure thus introduced is controlled by changing the amount of travel of the piston 58 based on the duty ratio of current supplied to the coil 52.

Further, when the negative pressure-adjusting valve 50 is used as negative pressure-discharging means for discharging negative pressure remaining in the negative pressure pipe 40, the above-mentioned negative pressure introduction mode and negative pressure discharge mode are repeated. More specifically, by controlling the duty ratio to 100% to switch the negative pressure-adjusting valve 50 to the negative pressure introduction mode, the negative pressure in the negative pressure pipe 40 is introduced into the negative pressure actuator 9. Then, by reducing the duty ratio to 0% to switch the negative pressure-adjusting valve 50 to the negative pressure discharge mode, the negative pressure introduced into the negative pressure actuator 9 is discharged into the atmosphere. By thus repeating the above-mentioned negative pressure introduction mode and negative pressure discharge mode, the negative pressure remaining in the negative pressure pipe 40 is discharged.

The intake pipe 4 is provided with a water-cooled intercooler 11. The intercooler 11 is provided for cooling intake air e.g. when the temperature of the intake air is made higher by the supercharging operation of the supercharger 8.

An EGR pipe 14 is provided between the intake pipe 4 and the exhaust pipe 5. Part of exhaust gases exhausted from the engine 3 is recirculated from the exhaust pipe 5 into the intake pipe 4 via the EGR pipe 14 as EGR gases, whereby combustion temperature in the combustion chamber 3c is lowered to decrease NOx contained in the exhaust gases.

The EGR pipe 14 is provided with an EGR control valve 15 and an EGR cooler 16 at respective locations in the mentioned order from the exhaust pipe 5 side. The EGR control valve 15 is implemented by a linear solenoid valve, and the valve lift amount thereof is controlled by a drive signal from the ECU 60, whereby the amount of EGR gases is controlled. The EGR cooler 16 is provided for cooling EGR gases when the engine 3 is in e.g. a high-load operation.

Further, the EGR pipe 14 includes a cooler passage 14a in which the EGR cooler 16 is disposed, and a bypass passage 14b bypassing the cooler passage 14a. An EGR bypass valve 17 is disposed at a portion of the EGR pipe 14 branching into the cooler passage 14a and the bypass passage 14b. The EGR bypass valve 17 is provided for switching the EGR pipe 14 between the cooler passage 14a and the bypass passage 14b, and is actuated by a negative pressure actuator 18 and a negative pressure switching valve 19.

The negative pressure actuator 18 is of a diaphragm type which is operated by negative pressure, similarly to the above-described negative pressure actuator 9, and has a diaphragm defining a negative pressure chamber, a lift rod which is fixed to the diaphragm and is connected to the EGR bypass valve 17, and a return spring for returning the lift rod (none of which are specifically shown). The negative pressure chamber of the negative pressure actuator 18 is communicated with the negative pressure pipe 40 or the atmosphere according to opening and closing of the negative pressure switching valve 19.

The negative pressure-switching valve 19 is implemented by an open-close solenoid valve, and operates such that when it is energized, it causes the negative pressure chamber of the negative pressure actuator 18 to communicate with the atmosphere, and when it is deenergized, it causes the negative pressure chamber to communicate with the negative pressure pipe 40, to thereby introduce the negative pressure in the negative pressure pipe 40 into the negative pressure chamber. The energization of the negative pressure-switching valve 19 is controlled by a control signal from the ECU 60.

With the above-described configuration, when the energization of the negative pressure-switching valve 19 is stopped, the negative pressure chamber of the negative pressure actuator 18 is communicated with the negative pressure pipe 40, and the lift rod is attracted toward the negative pressure chamber via the diaphragm by the negative pressure introduced into the negative pressure chamber, whereby the EGR bypass valve 17 is actuated to switch the EGR pipe 14 to the cooler passage 14a. On the other hand, when the negative pressure-switching valve 19 is energized, the negative pressure chamber of the negative pressure actuator 18 is communicated with the atmosphere, whereby the negative pressure introduced into the negative pressure chamber is discharged, and the lift rod is returned by the return spring, whereby the EGR bypass valve 17 is actuated to switch the EGR pipe 14 to the bypass passage 14b.

Further, the negative pressure pipe 40 is provided with a negative pressure pipe inner pressure sensor 31. The negative pressure pipe inner pressure sensor 31 detects a pressure PBA in the negative pressure pipe 40 (hereinafter referred to as the "negative pressure pipe inner pressure PBA") as an absolute pressure, and delivers a signal indicative of the detected negative pressure pipe inner pressure PBA to the ECU 60. Therefore, the fact that the negative pressure pipe inner pressure PBA is small indicates that the negative pressure in the negative pressure pipe 40 is large.

Further, the lift rod of the negative pressure actuator 18 is provided with an EGR bypass valve opening sensor 32. The EGR bypass valve opening sensor 32 detects a degree θVBP of opening of the EGR bypass valve 17 (hereinafter referred to as the "EGR bypass valve opening degree θVBP"), and delivers a signal indicative of the detected EGR bypass valve opening degree θ VBP to the ECU 60.

Delivered to the ECU 60 are a detection signal indicative of an operation amount AP of an accelerator pedal (not shown) of the vehicle (hereinafter referred to as the "accelerator pedal opening AP") from an accelerator pedal opening sensor 33 and a detection signal indicative of a speed VP of the vehicle (hereinafter referred to as the "vehicle speed VP") from a vehicle speed sensor 34.

Also delivered to the ECU 60 are a detection signal indicative of an ON/OFF state of an ignition switch 36 from the ignition switch 36, and a detection signal indicative of an ON/OFF state of a brake pedal (not shown) from a brake switch 37.

The ECU 60 is implemented by a microcomputer comprising an I/O interface, a CPU, a RAM, and a ROM (none of which are specifically shown). Based on the detection signals from the above-mentioned various types of sensors 30 to 34, the ECU 60 executes various kinds of engine control, e.g. control of a fuel injection amount, according to control programs stored in the ROM etc.

Further, the ECU 60 executes negative pressure discharge control for discharging negative pressure remaining in the negative pressure pipe 40 when the engine 3 is in an idle stop. It should be noted that in the present embodiment, the ECU 60 corresponds to negative pressure-discharging means, negative pressure discharge completion-determining means, energization stopping means, and energization suspending means.

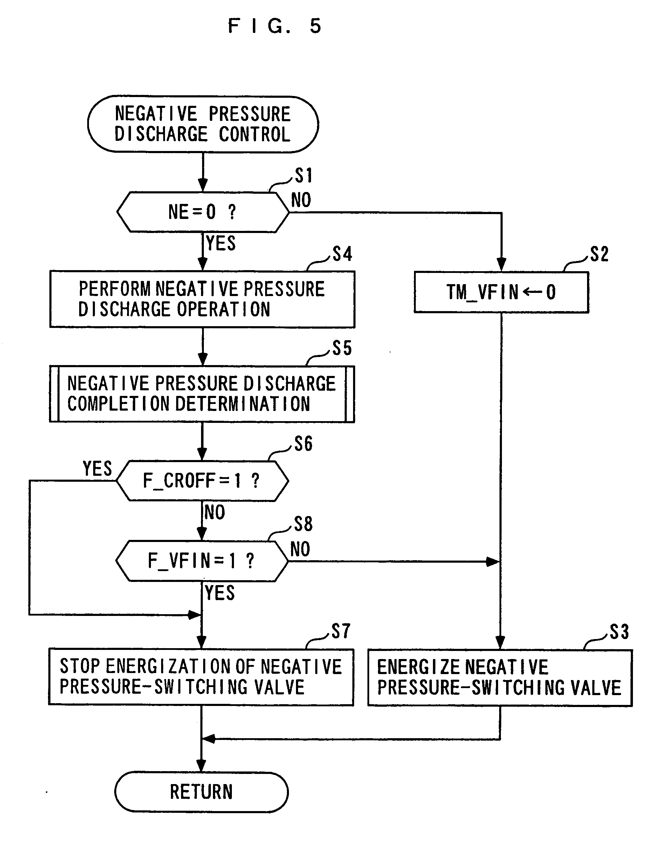

FIG. 5 shows a process for the above-mentioned negative pressure discharge control. The present process is executed whenever a predetermined time (e.g. 10 msec) elapses when idle stop conditions are satisfied. When the following operating conditions (a) to (e) of the engine 3 and the vehicle are satisfied, it is determined thin idle stop conditions are satisfied:
(a) The ignition switch 36 is in the ON state.
(b) The engine speed NE is not lower than a predetermined rotational speed (e.g. 300 rpm).
(c) The vehicle speed VP is not higher than a predetermined speed (e.g. 1 km/h).
(d) The accelerator pedal opening AP is not larger than a predetermined opening degree (e.g. 1°).
(e) The brake switch 37 is in the ON state.

In the present process, first, in a step 1 (shown as S1 in abbreviated form in FIG. 5; the following steps are also shown in abbreviated form), it is determined whether or not the engine speed NE is equal to 0. If the answer to this question is negative (NO), i.e. if the engine 3 has not been stopped yet after the idle stop conditions are satisfied, a value TM_VFIN of a negative pressure discharge completion timer (hereinafter referred to as "the negative pressure discharge completion timer value TM_VFIN") of an up count type is reset to 0 (step 2), and energization of the negative pressure switching valve 19 is performed, followed by terminating the present process.

On the other hand, if the answer to the question of the step 1 is affirmative (YES), i.e. if the engine 3 has been stopped, the operation of discharging the negative pressure in the negative pressure pipe 40 is executed (step 4). More specifically, the negative pressure discharge operation is performed by delivering a control signal to the negative pressure-adjusting valve 50 to alternately repeat the above-described negative pressure introduction mode and negative pressure discharge mode by the negative pressure-adjusting valve 50. By executing the negative pressure discharge operation, the negative pressure remaining in the negative pressure pipe 40 is gradually discharged into the atmosphere.

Next, a negative pressure discharge completion determination process is executed (step 5). The negative pressure discharge completion determination process is executed for determining whether or not discharge of the negative pressure by the above-mentioned negative pressure discharge operation is completed, a detailed description of which will be given hereinafter.

Next, it is determined whether or not an energization suspension flag F_CROFF is equal to 1 (step 6). As described hereinafter, the energization suspension flag F_CROFF is set to 1 when it is determined in the negative pressure discharge completion determination process that the energization of the negative pressure-switching valve 19 should be temporarily stopped. Therefore, if the answer to the question of the step 6 is affirmative (YES), the energization of the negative pressure-switching valve 19 is stopped (step 7), followed by terminating the present process.

On the other hand, if the answer to the question of the step 6 is negative (NO), it is determined whether or not a negative pressure discharge completion flag F_VFIN is equal to 1 (step 8). As described hereinafter, the negative pressure discharge completion flag F_VFIN is set to 1 when it is determined in the negative pressure discharge completion determination process that the discharge of the negative pressure has been completed. If the answer to the question of the step 8 is negative (NO), i.e. if it is determined that the discharge of the negative pressure has not been completed, the energization of the negative pressure-switching valve 19 is continued by executing the step 3, followed by terminating the present process. On the other hand, if the answer to the question of the step 8 affirmative (YES), i.e. if the discharge of the negative pressure has been completed, the energization of the negative pressure-switching valve 19 is stopped by executing the step 7, followed by terminating the present process.

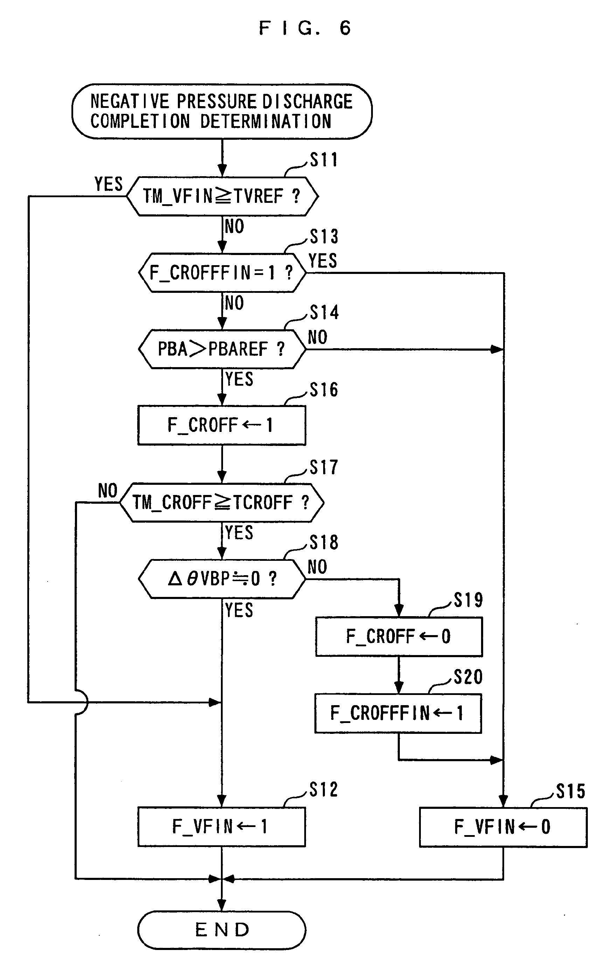

FIG. 6 shows the negative pressure discharge completion determination process executed in the step 5 as a sub routine. In the present process, first, it is determined whether or not the negative pressure discharge completion timer value TM_VFIN is not smaller than a predetermined time TVREF (e.g. 20 to 40 msec) (step 11). If the answer to this question is affirmative (YES), i.e. if the predetermined time TVREF has elapsed after the negative pressure discharge operation is started, it is judged that discharge of the negative pressure from the negative pressure pipe 40 by the negative pressure discharge operation has been completed, so that the negative pressure discharge completion flag F_VFIN is set to 1 (step 12), followed by terminating the present process. In accordance with execution of the step 12, the answer to the question of the step 8 in FIG. 5 is affirmative (YES), and by executing the step 7, the energization of the negative pressure-switching valve 19 is stopped.

On the other hand, if the answer to the question of the step 11 is negative (NO), i.e. if the predetermined time TVREF has not elapsed after the negative pressure discharge operation is started, it is determined whether or not an energization suspension termination flag F_CROFFFIN, referred to hereinafter, is equal to 1 (step 13). If the answer to this question is negative (NO), it is determined whether or not the negative pressure pipe inner pressure PBA is larger than a predetermined value PBAREF (step 14) . If the answer to this question is negative (NO), i.e. if PBA ≦ PBAREF holds, it is judged that the negative pressure in the negative pressure pipe 40 is large, and hence the discharge of the negative pressure has not been completed, so that the negative pressure discharge completion flag F_VFIN is set to 0 (step 15), followed by terminating the present process. In accordance with execution of the step 15, the answer to the question of the step 8 in FIG. 5 is negative (NO), and by executing the step 3, the energization of the negative pressure-switching valve 19 is continued.

On the other hand, if the answer to the question of the step 14 is affirmative (YES), i.e. if PBA > PBAREF holds, i.e. if the negative pressure in the negative pressure pipe 40 is smaller than the predetermined value, there is a possibility that the discharge of the negative pressure has been completed, and hence the energization suspension flag F_CROFF is set to 1 (step 16). In accordance with the execution of the step 16, the answer to the question of the step 6 in FIG. 5 is affirmative (YES), and by executing the step 7, the energization of the negative pressure-switching valve 19 is temporarily stopped.

Next, it is determined whether or not a value TM_CROFF of an energization suspension timer for measuring an elapsed time after the above-mentioned energization suspension is not smaller than a predetermined time TCROFF (step 17). If the answer to this question is negative (NO), it is estimated that the negative pressure in the negative pressure pipe 40 is not stable after the energization suspension, and hence the present process is immediately terminated.

On the other hand, if the answer to the question of the step 17 is affirmative (YES), i.e. if the predetermined time TCROFF has elapsed after the energization suspension, it is determined whether or not an EGR bypass valve opening degree change amount Δ θ VBP is approximately equal to 0 (step 18). The EGR bypass valve opening degree change amount Δ θ VBP is calculated as the difference between the current value of the EGR bypass valve opening degree θ VBP and a value of the same at the start of the energization suspension.

If the answer to the question of the step 18 is affirmative (YES), the EGR bypass valve opening degree θ VBP has almost been unchanged after the energization suspension, so that it is estimated that there is very little negative pressure remaining in the negative pressure pipe 40. As a result, it is determined that the discharge of the negative pressure in the negative pressure pipe 40 has been completed, so that the negative pressure discharge completion flag F_VFIN is set to 1 in the step 12, followed by terminating the present process. That is, in this case, it is determined that the discharge of the negative pressure has been completed without awaiting the elapse of the predetermined time TVREF after the start of the negative pressure discharge operation (YES to the step 11), and thereafter the energization of the negative pressure-switching valve 19 continues to be stopped.

On the other hand, if the answer to the question of the step 18 is negative (NO), i.e. if the EGR bypass valve opening degree θ VBP is changed even after the energization of the negative pressure-switching valve 19 is temporarily stopped, it is estimated that the negative pressure remains in the negative pressure pipe 40, and hence it is determined that the discharge of negative pressure in the negative pressure pipe 40 has not been completed, so that the energization suspension flag F_CROFF is set to 0 (step 19) . Next, to indicate the fact that the energization suspension control is terminated, the energization suspension termination flag F_CROFFFIN is set to 1 (step 20), and then the step 15 is executed, followed by terminating the present process. By executing the steps 19 and 15, both of the answers to the questions of the steps 6 and 8 in FIG. 5 are negative (NO), whereby the energization of the negative pressure-switching valve 19 is restarted.

Further, after the step 20 is executed, the answer to the question of the step 13 is affirmative (YES), and in this case, by executing the step 15, the energization of the negative pressure-switching valve 19 is continued. Thereafter, when the predetermined time TVREF has elapsed after the start of the negative pressure discharge operation, the answer to the question of the step 11 becomes affirmative (YES), so that it is determined that the discharge of the negative pressure has been completed, and the energization of the negative pressure-switching valve 19 is stopped. As descried above, the energization suspension control for the negative pressure-switching valve 19 is only once executed, and if the completion of discharge of the negative pressure is not confirmed during the control, the energization of the negative pressure-switching valve 19 is continued until the predetermined time TVREF elapses after the start of the negative pressure discharge operation.

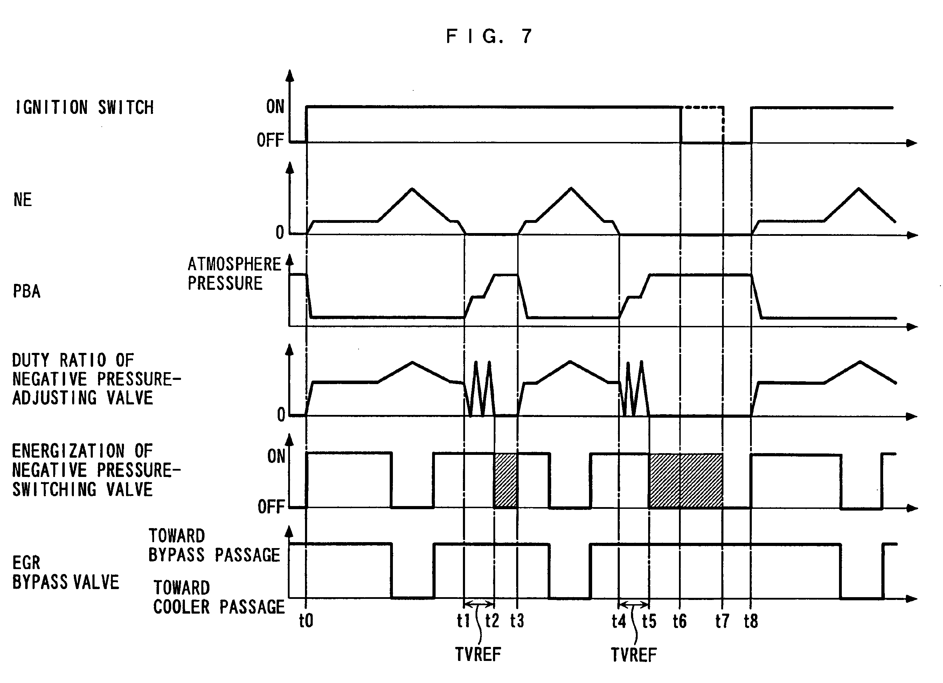

FIG. 7 shows an example of an operation of the control system performed according to the above-described negative pressure discharge control process. It should be noted that in this example, a part of operation performed according to the above-described energization suspension control is omitted for convenience of description. In this example, if the idle stop conditions are not satisfied in a state where the ignition switch 36 is in the ON state (t0 to t1, t3 to t4, and after t8), the negative pressure pipe 40 is in a negatively pressurized state due to negative pressure supplied from the vacuum pump 43.

Further, in this case, when the engine speed NE is relatively small, the negative pressure-switching valve 19 is energized, whereby the negative pressure chamber of the negative pressure actuator 18 is communicated with the atmosphere, and the EGR bypass valve 17 is actuated toward the bypass passage 14b. On the other hand, when the engine speed NE is relatively large, the energization of the negative pressure-switching valve 19 is stopped, whereby the negative pressure chamber is communicated with the negative pressure pipe 40, and the EGR bypass valve 17 is actuated toward the cooler passage 14a.

Further, when the idle stop conditions are satisfied in the state where the ignition switch 36 is in the ON state, the negative pressure discharge control is started. Then, when the engine speed NE becomes 0 (t1), the negative pressure discharge operation is executed (step 4), and the energization of the negative pressure-switching valve 19 is performed (step 3). As described hereinabove, this negative pressure discharge operation is performed by increasing and decreasing the duty ratio of the current supplied to the coil 52 of the negative pressure-adjusting valve 50 between 0 to 100%, thereby alternately repeating the execution of the negative pressure discharge mode and the negative pressure introduction mode by the negative pressure-adjusting valve 50. By performing the negative pressure discharge operation, the negative pressure in the negative pressure pipe 40 is gradually discharged to make and the negative pressure pipe inner pressure PBA closer to the atmospheric pressure.

Thereafter, when the predetermined time TVREF has elapsed after the negative pressure discharge operation is started (t2, YES to the step 11), it is determined that the discharge of the negative pressure has been completed (step 12), and accordingly the energization of the negative pressure-switching valve 19 is stopped (step 7). This causes the energization of the negative pressure-switching valve 19 to remain stopped until the engine 3 is restarted when the idle stop conditions cease to be satisfied (t2 to t3, a hatched zone) after that, which reduces power consumption of the negative pressure-switching valve 19.

Further, in this example, the idle stop conditions are satisfied immediately before the time point t4, and the ignition switch 36 is turned off at a time point t6. In this case, similarly to the above-mentioned time points t1 to t2, when the engine speed NE becomes 0 (t4), the negative pressure discharge operation is executed, and the negative pressure-switching valve 19 is energized. Then, when the predetermined time TVREF has elapsed (t5), it is determined that the discharge of the negative pressure has been completed, so that the energization of the negative pressure-switching valve 19 is stopped. Thereafter, when the ignition switch 36 is turned off (t6), the ECU 60 is maintained in the power ON state in order to store learned values and the like during a predetermined after-run period (t6 to t7, a time period indicated by a broken line). Therefore, in this case, the negative pressure-switching valve 19 remains deenergized until the after-run period is terminated (t5 to t7, a hatched zone), whereby the power consumption of the negative pressure-switching valve 19 is reduced.

As described above, according to the present embodiment, when the engine 3 is in an idle stop, the negative pressure remaining in the negative pressure pipe 40 is discharged, and it is determined whether or not the discharge of the negative pressure has been completed. Then, when it is determined that the discharge of the negative pressure has been completed, the energization of the negative pressure-switching valve 19 is stopped. Therefore, when the energization of the negative pressure-switching valve 19 is stopped, the negative pressure remaining in the negative pressure pipe 40 has been positively discharged, and hence the EGR bypass valve 17 cannot be operated by negative pressure. As a result, by reducing the frequency of operation of the EGR bypass valve 17, it is possible to prolong the service life of the EGR bypass valve 17, and it is possible to reduce the power consumption by stopping energization of the negative pressure-switching valve 19 in optimal timing.

Further, the negative pressure discharge control is executed during the idle stop in which the engine 3 is frequently stopped, compared with the case where the engine 3 is stopped by turn-off of the ignition switch 36, and hence it is possible to effectively obtain the advantageous effect of reducing the frequency of operation of the EGR bypass valve 17.

Further, when the detected negative pressure pipe inner pressure PBA is larger than the predetermined value PBAREF i.e. when the negative pressure becomes smaller after the discharge of the negative pressure is started, the energization of the negative pressure-switching valve 19 is temporarily stopped, and thereafter when the detected EGR bypass valve opening degree θ VBP remains unchanged, it is determined that the discharge of the negative pressure has been completed. Therefore, it is possible to accurately determine the completion of discharge of the negative pressure, and based on the result of this determination, it is possible to stop the energization of the negative pressure-switching valve 19 in earlier optimal timing, and hence it is possible to more effectively obtain the advantageous effect of reducing the power consumption.

It should be noted that the present invention is by no means limited to the embodiment described above, but it can be practiced in various forms. For example, although in the present embodiment, the negative pressure discharge control shown in FIG. 5 is executed when the engine 3 is in an idle stop, the negative pressure discharge control may be executed when the engine 3 is stopped by turn-off of the ignition switch 36. By doing this, the energization of the negative pressure-switching valve 19 is stopped during a time period from stoppage of the engine 3 until termination of the after-run period, whereby it is possible to reduce the power consumption of the negative pressure-switching valve 19.

Further, although in the above-described embodiment, the negative pressure-adjusting valve 50 for controlling the boost pressure of the supercharger 8 is used as the negative pressure-discharging means, it is possible to use any other desired means capable of discharging negative pressure from the negative pressure pipe 40. For example, the negative pressure-switching valve 19 may be controlled to cause negative pressure to be discharged via the negative pressure actuator 18.

Further, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

It is further understood by those skilled in the art that the foregoing are preferred embodiments of the invention, and that various changes and modifications may be made without departing from the invention as defined by the appended claims.

## Claims

1. A control system for an internal combustion engine, including:
an EGR passage (14) that recirculates part of exhaust gases discharged from an engine (3) from an exhaust system (5) to an intake system (4), as EGR gases, the EGR passage having a cooler passage (14a) provided with an EGR cooler (16), and a bypass passage (14b) bypassing the cooler passage (14a),
an EGR bypass valve (17) that is provided at a branch portion of the EGR passage branching into the cooler passage (14a) and the bypass passage (14b), for switching the EGR passage between the cooler passage (14a) and the bypass passage (14b),
a negative pressure source (43) that generates negative pressure, and
a negative pressure-supplying passage (40) that is connected to the negative pressure source,
**characterized by** comprising:
a negative pressure-switching valve (19) that, when energized, causes the EGR bypass valve (17) to be driven toward one of the cooler passage (14a) and the bypass passage (14b), and when deenergized, causes the EGR bypass valve (17) to be driven toward the other of the cooler passage (14a) and the bypass passage (14b) by negative pressure in the negative pressure-supplying passage;
negative pressure-discharging means (50, 60) for discharging negative pressure remaining in the negative pressure-supplying passage at a time of stopping the engine (3) :
negative pressure discharge completion-determining means (60) for determining whether or not discharge of negative pressure by said negative pressure-discharging means is completed; and
energization stopping means (60) for stopping energization of said negative pressure-switching valve (19) when it is determined by said negative pressure discharge completion-determining means that discharge of negative pressure from the negative pressure-supplying passage is completed.

2. The control system as claimed in claim 1, wherein the time of stopping the engine (3) is a time of an idle stop in which the engine (3) is automatically stopped when predetermined idle stop conditions are satisfied.

3. The control system as claimed in claim 1 or 2, further comprising:
negative pressure-detecting means (31) for detecting negative pressure (PBA) in the negative pressure-supplying passage;
EGR bypass valve opening-detecting means (32) for detecting a degree ( θ VBP) of opening of the EGR bypass valve (17); and
energization suspending means (60) for temporarily stopping the energization of said negative pressure-switching valve (19),
wherein said energization suspending means temporarily stops the energization of said negative pressure-switching valve (19), when the detected negative pressure in the negative pressure-supplying passage becomes smaller than a predetermined value after a start of discharge of negative pressure by said negative pressure-discharging means, and said negative pressure discharge completion-determining means determines that the discharge of negative pressure from the negative pressure-supplying passage is completed when the detected degree of opening of the EGR bypass valve (17) remains unchanged after temporary stoppage of the energization.

## Patentansprüche

1. Steuerungs-/Regelungssystem für einen Verbrennungsmotor, umfassend:
einen EGR-Durchgang (14), welcher ein Teil von Abgasen, welche aus einem Motor (3) von einem Abgassystem (5) ausgestoßen werden, zu einem Ansaugsystem (4) als EGR-Gase zurückführt, wobei der EGR-Durchgang einen Kühlerdurchgang (14a) aufweist, welcher mit einem EGR-Kühler (16) vorgesehen ist, und einen Umgehungsdurchgang (14b) aufweist, welcher den Kühlerdurchgang (14a) umgeht,
ein EGR-Umgehungsventil (17), welches an einem Verzweigungsabschnitt des EGR-Durchgangs vorgesehen ist, welcher sich in dem Kühlerdurchgang (14a) und dem Umgehungsdurchgang (14b) verzweigt, um den EGR-Durchgang zwischen dem Kühlerdurchgang (14a) und dem Umgehungsdurchgang (14b) umzuschalten,
eine Unterdruckquelle (43), welche einen Unterdruck erzeugt, und
einen Unterdruckzufuhrdurchgang (40), welcher mit der Unterdruckquelle verbunden ist,
**dadurch gekennzeichnet, dass** es umfasst:
ein Unterdruckumschaltventil (19), welches, wenn erregt veranlasst, dass das EGR-Umgehungsventil (17) in Richtung eines von dem Kühlerdurchgang (14a) und dem Umgehungsdurchgang (14b) angetrieben wird, und wenn aberregt veranlasst, dass das EGR-Umgehungsventil (17) in Richtung des anderen von dem Kühlerdurchgang (14a) und dem Umgehungsdurchgang (14b) angetrieben wird;
Unterdruckabgabemittel (50, 60) zum Abgeben von Unterdruck, welcher in dem Unterdruckzufuhrdurchgang zu einem Zeitpunkt, zu dem der Motor (3) gestoppt ist, verbliebenen ist;
Unterdruckabgabe-Abschluss-Bestimmungsmittel (60) zum Bestimmen, ob eine Abgabe von Unterdruck durch die Unterdruckabgabemittel abgeschlossen ist oder nicht; und
Erregung-Stoppmittel (60) zum Stoppen einer Erregung des Unterdruckumschaltventils (19), wenn es durch die Unterdruckabgabe-Abschluss-Bestimmungsmittel bestimmt wird, dass eine Abgabe von Unterdruck aus dem Unterdruckzufuhrdurchgang abgeschlossen ist.

2. Steuerungs-/Regelungssystem nach Anspruch 1,
wobei der Zeitpunkt des Stoppens des Motors (3), ein Zeitpunkt eines Leerlaufstopps ist, in welchem der Motor (3) automatisch gestoppt wird, wenn vorbestimmte Leerlaufstoppbedingungen erfüllt sind.

3. Steuerungs-/Regelungssystem nach Anspruch 1 oder 2,
ferner umfassend:
Unterdruckdetektionsmittel (31) zum Detektieren eines Unterdrucks (PBA) in dem Unterdruckzufuhrdurchgang;
EGR-Umgehungsventil-Öffung-Detektionsmittel (32) zum Detektieren eines Öffnungsgrades (θVBP) des EGR-Umgehungsventils (17); und
Erregung-Aufhebungsmittel (60) zum temporären Stoppen der Erregung des Unterdruckumschaltventils (19),
wobei die Erregung-Aufhebungsmittel die Erregung des Unterdruckumschaltventils (19) temporär stoppen, wenn nach Beginn einer Abgabe von Unterdruck durch die Unterdruckabgabemittel der detektierte Unterdruck in dem Unterdruckzufuhrdurchgang kleiner als ein vorbestimmter Wert wird, und die Unterdruckabgabe-Abschluss-Bestimmungsmittel bestimmen, dass die Abgabe von Unterdruck aus dem Unterdruckzufuhrdurchgang abgeschlossen ist, wenn der detektierte Öffnungsgrad des EGR-Umgehungsventils (17) unverändert bleibt, nachdem die Erregung temporär gestoppt wurde.

## Revendications

1. Système de commande pour moteur à combustion interne, comprenant :
un passage EGR (14) qui recircule une partie des gaz d'échappement évacués d'un moteur (3) d'un système d'échappement (5) à un système d'admission (4), sous forme de gaz EGR, le passage EGR ayant un passage de refroidisseur (14a) pourvu d'un refroidisseur EGR (16), et un passage de dérivation (14b) en dérivation du passage de refroidisseur (14a),
une soupape de dérivation EGR (17) qui est disposée à une partie de branche du passage EGR bifurquant dans le passage de refroidisseur (14a) et le passage de dérivation (14b), pour commuter le passage EGR entre le passage de refroidisseur (14a) et le passage de dérivation (14b),
une source de pression négative (43) qui génère une pression négative, et
un passage d'alimentation de pression négative (40) qui est connecté à la source de pression négative,
**caractérisé en ce qu'**il comprend :
une soupape de commutation de pression négative (19) qui, lorsqu'elle est mise sous tension, amène la soupape de dérivation EGR (17) à être entraînée vers l'un du passage de refroidisseur (14a) et du passage de dérivation (14b), et lorsqu'elle est mise hors tension, amène la soupape de dérivation EGR (17) à être entraînée vers l'autre du passage de refroidisseur (14a) et du passage de dérivation (14b) par une pression négative dans le passage d'alimentation de pression négative ;
un moyen d'évacuation de pression négative (50, 60) pour évacuer la pression négative restant dans le passage d'alimentation de pression négative au moment de l'arrêt du moteur (3) ;
un moyen de détermination de fin d'évacuation de pression négative (60) pour déterminer si l'évacuation de la pression négative par ledit moyen d'évacuation de pression négative est terminée ; et
un moyen d'arrêt de mise sous tension (60) pour arrêter la mise sous tension de ladite soupape de commutation de pression négative (19) lorsqu'il est déterminé par ledit moyen de détermination de fin d'évacuation de pression négative que l'évacuation de la pression négative du passage d'alimentation de pression négative est terminée.

2. Système de commande selon la revendication 1, dans lequel le moment de l'arrêt du moteur (3) est un temps d'un arrêt au ralenti auquel le moteur (3) est automatiquement arrêté lorsque des conditions prédéterminées d'arrêt au ralenti sont remplies.

3. Système de commande selon la revendication 1 ou 2, comprenant en outre :
un moyen de détection de pression négative (31) pour détecter une pression négative (PBA) dans le passage d'alimentation de pression négative ;
un moyen de détection d'ouverture de soupape de dérivation EGR (32) pour détecter un degré (θVBP) d'ouverture de la soupape de dérivation EGR (17) ; et
un moyen de suspension de mise sous tension (60) pour arrêter temporairement la mise sous tension de ladite soupape de commutation de pression négative (19),
dans lequel ledit moyen de suspension de mise sous tension arrête temporairement la mise sous tension de ladite soupape de commutation de pression négative (19), lorsque la pression négative détectée dans le passage d'alimentation de pression négative devient inférieure à une valeur prédéterminée après un début d'évacuation de pression négative par ledit moyen d'évacuation de pression négative, et ledit moyen de détermination de fin d'évacuation de pression négative détermine que l'évacuation de pression négative du passage d'alimentation de pression négative est terminée lorsque le degré détecté d'ouverture de la soupape de dérivation EGR (17) reste inchangé après l'arrêt temporaire de la mise sous tension.
